# EUROPEAN PATENT APPLICATION

(11) **EP 2 587 434 A1**
(43) Date of publication of application: **01.05.2013**
(21) Application number: 11187283.4
(22) Date of filing: 31.10.2011
(51) Int. Cl.: G06Q 20/42, G06Q 20/02

(54) **Authentication method**

(71) Applicant: Money and Data Protection Lizenz GmbH & Co. KG, 33611 Bielefeld (DE)
(72) Inventor: Adenuga, Dominic, 22299 Hamburg (DE)
(74) Representative: TER MEER - STEINMEISTER & PARTNER GbR

(57) **Abstract**

A method of authenticating a user to a transaction at a terminal (10), wherein a user identification is transmitted from the terminal (10) to a transaction partner (12) via a first communication channel (14), and an authentication device (18) authenticates the user by means of a mobile device (16) that is capable of connecting to a mobile communications network via a wireless second communication channel (20), characterized in that the authentication device (18) is remote from the transaction partner (12) and communicates with the transaction partner via a third communication channel (22), and wherein information linking the user identification to an address of the mobile device (16) in the mobile communications network is stored only in the authentication device (18), and the authentication device notifies to the transaction partner (12) only whether or not the user is authenticated, without disclosing any further data pertaining to the user and/or the mobile device (16).

## Description

The invention relates to a method of authenticating a user to a transaction at a terminal, wherein a user identification is transmitted from the terminal to a transaction partner via a first communication channel, and an authentication device authenticates the user by means of a mobile device that is capable of connecting to a mobile communications network via a wireless second communication channel.

In transactions in which a user communicates with a remote transaction partner via a communication channel such as the Internet, it is important to assure that an individual that identifies itself as an authorised user is actually the person it alleges to be. For example, when a user makes an online bank transaction in which he identifies himself as the owner of a certain account and requests that an amount of money is remitted to some other account, an authentication method is needed for verifying the identity of the requestor. Other examples of transactions where an authentication of the user should be required are transactions in which a user asks for online access to a database or other online services that involve sensitive data.

WO 2007/072001 A1 discloses an authentication method of the type indicated above, wherein the authentication device responds to the transmission of the user identification with sending an authentication token to the terminal from which the transaction has been requested. This token may for example be encoded in a digital image to be displayed on a display of the terminal. An authentication function in the mobile device is configured to capture this digital image and send it back to the authentication device via the second communication channel.

In this way, it can be confirmed that the person carrying the mobile device, e.g. a mobile telephone, is actually present at the location of the terminal from which the transaction has been requested. Thus, as long as the user is in control of his mobile device, the authentication method assures that no third party can fake the identification data of this user and perform any transactions in his place.

Additionally, this known method may comprise a step of locating the mobile device and checking the location of the mobile device against the location of the terminal.

It is an object of the invention to provide an authentication method that offers improve privacy protection for the user.

In order to achieve this object, the authentication method according to the invention is characterized in that the authentication device is remote from the transaction partner and communicates with the transaction partner via a third communication channel, and wherein information linking the user identification to an address of the mobile device in the mobile communications network is stored only in the authentication device, and the authentication device notifies to the transaction partner only whether or not the user is authenticated, without disclosing any further data pertaining to the user and/or the mobile device.

More specific embodiments and optional features of the invention are indicated in the dependent claims.

The terminal from which the user identification is transmitted may be a banking machine or a cashier, for example, but may also be any other device, such as a computer, capable of communicating with a remote transaction partner. The mobile device may for example be a mobile telephone or Smartphone, a laptop computer, a tablet computer or the like, but may also be a dedicated device that is designed specifically for the purpose of the authentication method described herein.

It may be advantageous when there is no communication whatsoever between the mobile device and the authentication device, nor between the mobile device and the terminal or any other entity, because, when there is no communication, there is no possibility that this communication may be tapped and may be used to outsmart the security system.

For this reason, it is preferred that the authentication method does not involve any communication with the mobile device.

In other embodiments it is possible that the mobile device receives authentication data from the authentication device via the first or second communication channel, optionally processes these data, and responds to the authentication device in a pre-defined way. These procedures can assure that the mobile device is actually the device that is identified by its IMSI (International Mobile Subscriber Identity), i.e. that the IMSI has not been imitated. This type of communication involved in these procedures can be classified by the feature that it does not depend upon any local input into or output from the mobile device.

In other embodiments it may be possible that the mobile device sends identification data such as a PIN number, an encoded fingerprint or iris pattern or the like of the user, permitting the authentication device to verify that the registered user is actually in control of the mobile device.

Embodiments of the invention will now be described in conjunction with the drawings, wherein:
- Fig. 1: is a block diagram illustrating an authentication method according to the invention;
- Fig. 2: is a time diagram illustrating an embodiment of the invention; and
- Fig. 3: is a block diagram illustrating an example of a communication scheme for an embodiment of the invention.

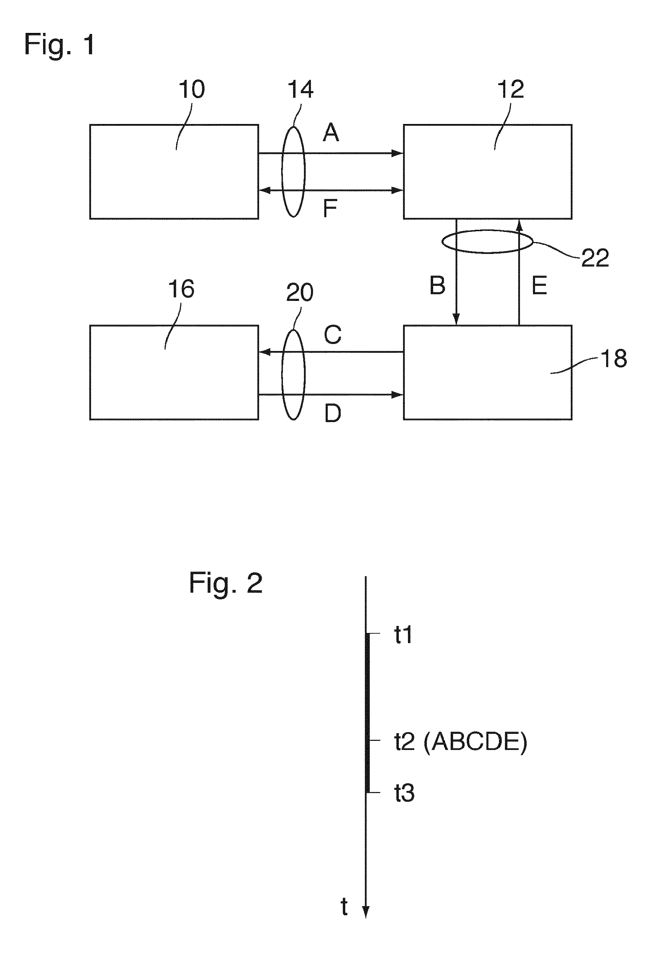

As is shown in Fig. 1, a transaction terminal 10, e.g. a banking machine, communicates with a remote transaction partner 12, e.g. a bank, via a first communication channel 14 which may be a wireline or wireless channel. A mobile device 16 communicates with an authentication device 18 via a second communication channel 20 which preferably includes a wireless link, e.g. a mobile telephone network. The authentication device 18 8 may be configured as a separate entity communicating with the transaction partner 12 via a third communication channel 22.

The mobile device 16 is carried by a user who is registered as a subscriber to the mobile telephone network forming the communication channel 20. The authentication device 18 is formed by data processing hardware and software and includes a database that stores a user ID of the user and the mobile telephone number (or any another mobile address) of the mobile device 16 of that user.

It shall now be assumed that the user wants to make a bank transaction via the terminal 10. To that end, the user operates the terminal 10 and sends a transaction request to the transaction partner 12. That request includes a step A of transmitting the user-ID to the transaction partner 12. In a step B, the transaction partner 12 forwards the user-ID to the authentication device 18. Thereupon, the authentication device 18 retrieves the mobile telephone number and or the IMSI of the user and contacts the mobile telephone network to check whether or not the mobile device 16 is active (step C). When it is confirmed in step D that the mobile device is active, the authentication device 18 sends an authentication signal to the transaction partner 12 (step E). The authentication signal preferably includes the user-ID that has been sent in step B and informs the transaction partner that this specific user is authenticated to the requested transaction. Thereupon, the transaction between the user and the transaction partner 12 will be performed via the terminal 10 (step F).

Fig 2 shows a time diagram illustrating one embodiment of the authentication method that has been outlined above.

At a time t1, the user who wants to request a transaction activates his mobile device 16. At a time t2, the sequence of steps A-B-C-D-E is performed to authenticate the user. Since, at this time, the mobile device 16 is actually active, the authentication is successful. Then, at a time t3, the mobile device 16 is deactivated either manually or automatically by a self-deactivation function implemented in the device 16. As another alternative, a command to deactivate the mobile device 16 may be sent by the authentication device 18 when the user has been authenticated successfully.

Preferably, the time interval from t1 to t3 in which the mobile device 16 is active will be relatively small, e.g. only a few minutes or seconds. When it is found in steps C and D that the mobile device 16 is not active, it must be assumed that the person who is identified by the user-ID and is in control of the mobile device 16 does not actually want to request a transaction, and it must therefore be concluded that the user-ID sent in step A has been faked by an unauthorised third party. In that case, the authentication is denied in step E.

The authentication process may optionally include additional steps of communication between the terminal 10 and the authentication device 18 and/or between the mobile device 16 and the authentication device 18 or else between the terminal 10 and the mobile device 16 (either directly or via the user). Such communication protocols for authentication purposes are generally known in the art.

For example, the mobile device may use a pre-programmed algorithm to generate an identification code and send it to the authentication device. The pre-programmed algorithm is known to the authentication device and is used there to verify the identity of the mobile device, independently of its IMSI. The identification code may for example be a number from a list of "TAN" numbers that is stored in the mobile device, the algorithm being configured such that each number is used only once. On the other hand, in order to permit an infinite number of transactions, the identification codes may be generated dynamically, possibly with use of data such as the current date or the time of the day. In yet another embodiment, the identification code may be an encrypted password or an encrypted combination of a password with time and date data, the encryption being based on a dynamically varied encryption parameter that is sent from the authentication device.

The authentication will be successful only when the authentication device finds the identification code to be valid. In any case however, the authentication will be denied whenever it is found that the authentication function of the mobile device 16 is not active at the right time.

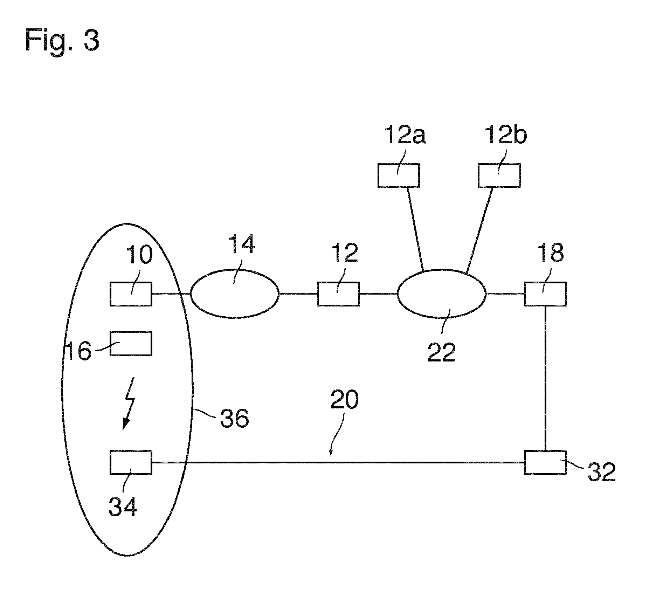

Fig. 3 illustrates a communication scheme for another embodiment in which the first communication channel 14 and the third communication channel 22 are formed by the Internet, for example. The authentication device 18 is installed remote from the transaction partner 12 and is run by a Trusted Third Party that is independent from the transaction partner 12. The second communication channel 20 is formed by a mobile telephone network including a Home Location Register (HLR) 32 and a plurality of Base Station Subsystems (BSS) 34 only one of which has been shown in Fig. 3 and each of which serves one or more mobile telephone cells 36. The mobile network supports Location Based Services (LBS) and is capable of locating the mobile devise 16 within the cell 36.

In this embodiment, the authentication device 18 checks not only whether the mobile device 16 is active or inactive but also queries the HLR 32 for the location of the mobile device, and the user is authenticated to the transaction only when the mobile device 16 is found to be active in the prescribed time window and is found to be located within a predetermined distance from the terminal 10 from which the transaction has been requested. Thus, a false authentication is possible only when the user-ID is sent from a certain terminal 10 at the right moment and, additionally, the mobile device 16 of the true user happens to be located in the vicinity of that terminal 10.

In yet another embodiment, the mobile device 16 may be a multi-purpose device such as a mobile telephone or a smartphone which the user will want to keep in the active state permanently, so that the time criterion for authentication would not be safe. In this case the authentication will be based only on the location criterion.

The authentication methods using the location criterion have the problem that, technically, the transaction partner 12 would be capable of permanently tracking the mobile device 16, so that privacy requirements or laws might be violated. The privacy of the users may however be preserved by assuring that the mobile addresses, IMSIs, or telephone numbers of the mobile devices 16 are known only to the Trusted Third Party running the authentication device 18, but not to the transaction partner 12. Then, the authentication device 18 will notify to the transaction partner 12 only whether or not the user is authenticated but will not disclose the current location of the user. Since the transaction partner has no access to the IMSI of the mobile device of the user, this procedure also avoids the risk that a dishonest transaction partner imitates the IMSI and/or discloses any other sensitive data of the user.

As is shown in Fig. 3, the authentication device 18 may provide the anonymised authentication services for a plurality of transaction partners 12a, 12b, e. g. a plurality of banks, Internet Service Providers and the like. The authentication methods employed may be different for different transaction partners and may also include methods of the type illustrated in Figs. 1 and 2 which use only the time criterion.

## Claims

1. A method of authenticating a user to a transaction at a terminal (10), wherein a user identification is transmitted from the terminal (10) to a transaction partner (12) via a first communication channel (14), and an authentication device (18) authenticates the user by means of a mobile device (16) that is capable of connecting to a mobile communications network via a wireless second communication channel (20), **characterized in that** the authentication device (18) is remote from the transaction partner (12) and communicates with the transaction partner via a third communication channel (22), and wherein information linking the user identification to an address of the mobile device (16) in the mobile communications network is stored only in the authentication device (18), and the authentication device notifies to the transaction partner (12) only whether or not the user is authenticated, without disclosing any further data pertaining to the user and/or the mobile device (16).

2. The method according to claim 1, wherein the authentication device (18) gathers status information on the mobile device (16) from a communication register (32) of the mobile communications network and authenticates the user on the basis of the gathered status information.

3. The method according to claim 1 or 2, wherein the mobile device (16) is normally inactive, and the authentication device (18) authenticates the user when a predetermined time relation exists between the time when the user identification is transmitted and a time when an authentication function in the mobile device is active.

4. The method according to claim 3, wherein the mobile device (16) is deactivated automatically after a predetermined time interval and/or when an authentication has been successful.

5. The method according to any of the preceding claims, wherein the authentication device (18) detects a current location of the mobile device (16) and authenticates the user only when the locations of the terminal (10) and of the mobile device (16) fulfil a predetermined spatial relationship.

6. The method according to claim 5, wherein the mobile communications network supports Location Based Services, and the authentication device (18) uses these Location Based Services for locating the mobile device (16).

7. The method according to any of the preceding claims, wherein the authentication device (18) communicates only with the communication register and not with the mobile device (16).

8. The method according to any of the claims 1 to 6, wherein the authentication device (18) communicates with the mobile device (16) in accordance with a predetermined authentication protocol, and the contents of this communication are independent of any local input to the mobile device.
